(19) Europäisches Patentamt
European Patent Office
Office européen des brevets

(11) Publication number: 0 153 410 B1

# (12) EUROPEAN PATENT SPECIFICATION

(45) Date of publication of patent specification: 12.09.90

(51) Int. Cl.$^5$: G 11 B 5/09, G 11 B 5/027, G 11 B 15/02, G 11 B 15/44

(21) Application number: 84902374.2

(22) Date of filing: 18.06.84

(86) International application number: PCT/JP84/00317

(87) International publication number: WO 85/00069 03.01.85 Gazette 85/01

## (54) APPARATUS FOR RECORDING AND REPRODUCING SIGNAL.

(30) Priority: 18.06.83 JP 109691/83

(43) Date of publication of application: 04.09.85 Bulletin 85/36

(45) Publication of the grant of the patent: 12.09.90 Bulletin 90/37

(84) Designated Contracting States: AT DE FR GB NL

(56) References cited:
GB-A- 977 134
JP-A- 488 220
JP-U-54 163 913
US-A-3 872 503

PATENT ABSTRACTS OF JAPAN, vol. 6, no. 212 (P-151)1090r, 26th October 1982; & JP-A-57 117 110 (SONY K.K.) 21-07-1982

PATENT ABSTRACTS OF JAPAN, vol. 7, no. 23 (P-171)1168r, 29th January 1983; & JP-A-57 176 513 (SHARP K.K.) 29-10-1982

(73) Proprietor: SONY CORPORATION
7-35 Kitashinagawa 6-Chome Shinagawa-ku
Tokyo 141 (JP)

(72) Inventor: TANAKA, Masato Sony Corporation
7-35, Kitashinagawa 6-chome
Shinagawa-ku Tokyo 141 (JP)

(74) Representative: TER MEER - MÜLLER - STEINMEISTER & PARTNER
Mauerkircherstrasse 45
D-8000 München 80 (DE)

(56) References cited:
PATENT ABSTRACTS OF JAPAN, vol. 6, no. 262 (P-164)1140r, 21st December 1982; & JP-A-57 158 006 (TOKYO SHIBAURA DENKI K.K.) 29-09-1982

MINI-MICRO SYSTEMS, vol. 16, no. 6, May 1983, pages 261-264, Denver, US; K. KELLY: "Streaming-tape drives emulate start/stop machines"

EP 0 153 410 B1

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

## Description

This invention relates to apparatus for treating signals in relation with a reciprocating recording medium. The signals are treated for either recording or for reproducing. In such an apparatus, the running direction of the recording medium, generally a tape, is automatically reversed at certain reversal positions, e.g., when the end of the medium is reached after a period of running in a first direction.

Background art

J.P.—U—54-163913 describes an apparatus for recording data signals, said apparatus comprising:

—a recording head,

—driving means for driving said recording medium in a first direction to record on a first track, and in a second direction to record on a second track,

—delay means for supplying said data signals to said recording head with a delay, said delay being longer during running of said recording medium in said second direction than during running in said first direction; and

—recording medium and detecting means for emitting a reverse signal as soon as it detects the end of the recording medium in the first direction.

Additionally the mentioned Japanese application discloses an apparatus for reproducing of data signals, said apparatus comprising:

—a reproducing head means,

—driving means for driving said recording medium in a first direction to reproduce data from a first track, and in a second direction to reproduce data from a second track, and,

—delay means for delaying said data signals as supplied from said reproducing head means with a delay, said delay being longer during running of said recording medium in said first direction than when running in said second direction.

In the known apparatus, the switching from the first delay period to the second delay period is provided as soon as the tape end detector detects the end of the recording medium. The different delay times serve for obtaining continuous recording or reproducing, respectively, of data signals even during the reverse period of the recording medium.

J.P.—U—57-117110 describes another apparatus for obtaining continuous recording and reproducing of data signals. For recording, the apparatus comprises an additional recording head, and for reproducing it comprises an additional reproducing head. A memory is provided for storing data signals during reversal periods. When recording, the stored signals are recorded on an additional track; when reproducing, the data recorded on the additional track are read by the additional reproducing head. Also in the apparatus as described in the just mentioned Japanese application, the tape end is detected by a tape end sensor.

Various forms of end sensors are known in the art, for example, such based on detection of the tape tension as the the tape end is approached, or on optical detection of the taut angle of the tape. Also it is known to detect a transparent or reflective leader optically or to detect a metallic leader through changes in inductance or with the signal at an electrode terminal. It is also known to optically detect a through-hole formed in the tape.

In practical use, it would be advantageous to be able to identify the near reversal position of a recording medium already before it arrives at this reversal position.

A recording apparatus according to the present invention comprises, besides the above mentioned features of a known recording apparatus, means for supplying a predetermined number of predetermined reversal mark signals, to said recording head, starting from the time when said recording medium reversal signal is emitted.

A first reproducing apparatus according to the present invention comprises, besides the above mentioned features of a known reproducing apparatus,

—separation circuit means for separating a predetermined kind of signals, namely reversal mark signals, having incrementing or decrementing values, indicating the near reversal position of the recording medium, from the signals read by said reproducing head, and

—comparing means for comparing the read reversal mark signals with a predetermined reversal mark signal for reversing the driving direction as soon as both signals become equal.

A second reproducing apparatus according to the present invention comprises, besides the above mentioned features of a known reproducing apparatus,

—separation circuit means for separating a predetermined kind of signals, namely address signals, after having detected reversal mark signals indicating the near reversal position of the recording medium, from the signals read by both heads of a reproducing head means for reading two tracks, and

—a comparing means for comparing the address signals from both tracks and for reversing the driving direction as soon as both addresses become equal or the address read from the first track becomes higher than the address read from the second track.

The inventive principle common to all said apparatus is that predetermined signals are used in relation with the detection of a rear tape reversal position.

Preferably reversal mark signals as well as address signals are commonly recorded onto the recording medium, together with data. This makes it possible to use the same addresses repeatedly along the length of the recording tracks in both directions. When reproducing these signals, the address signals as read from both tracks are only compared with each other in the time period during which the reversal mark signals are detected.

From GB—A—977 134 it is known to record address signals together with data signals onto a recording medium. When reading data from said recording medium, these data are only accepted in the case, when the address, as recorded together with the data, corresponds with the address by which the location was addressed from which the signals are read. This prior art gives no hint to use address signals for detecting the near end of the recording medium.

Brief description of the drawings

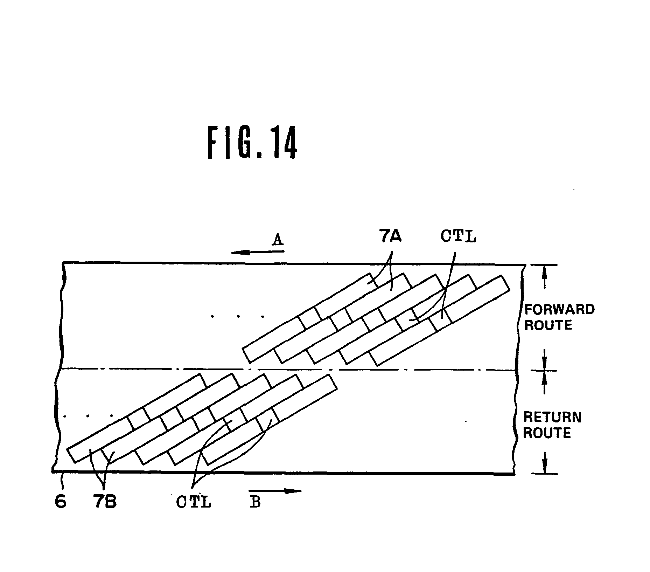

Fig. 1 is a block circuit diagram showing the basic construction of the recording part of the signal recording and reproducing apparatus of the present invention; Fig. 2 is a plan view showing an example of the recording pattern on the magnetic tape; Fig. 3 is a chart showing changes in the forward route addresses and the return route addresses relative to the tape travel quantity; Fig. 4 is a block circuit diagram showing the basic construction of the reproducing part of the signal recording and reproducing apparatus of the present invention; Fig. 5 is a block circuit diagram showing an example of the construction of the signal recording part for explaining an embodiment of the invention; Fig. 6 is a diagram showing an example of the block format of the recorded signal; Figs. 7 to 9 are views for explaining address changes in the signal delaying RAM shown in Fig. 5; Fig. 10 is a block circuit diagram for explaining an embodiment of the present invention; Figs. 11 to 13 are views for explaining address changes in the signal delaying RAM shown in Fig. 10; and Fig. 14 is a plan view showing an example of the recording pattern on the magnetic tape for explaining a further embodiment of the present invention.

Best mode for executing the invention

The signal recording and reproducing apparatus of the present invention is now described.

Fig. 1 is a block diagram for explaining the operating principle of the recording part of the signal recording and reproducing apparatus. In this Fig. 1, audio, video or other common data signals are supplied to an input terminal 1 e.g. in a digital signal format. These input signals are supplied to a selected first terminal *a* of a changeover switch 2, while being also supplied to a selected second terminal *b* of the switch 2 through a delay element 3 consisting of a memory such as shift register or random access memory (RAM). The output from the changeover switch 2 is supplied through a recording amplifier 4 to a recording head 5 so as to be recorded on a recording medium such as a magnetic tape 6. The tape 6 is caused to run in a first direction relative to the magnetic head 5, e.g., in the direction shown by the arrow mark A. When the tape has reached the tape end position, for example, the tape is caused to run in a second direction opposite to the first direction, e.g. in the direction shown by the arrow mark B. The changeover switch 2 is set to the selected first terminal *a* when the tape 6 runs in the first direction or the direction shown by the arrow mark A and to the selected second terminal *b* when the tape 6 runs in the second direction or the direction shown by the arrow mark B. It should be noted that the element 3 has a delay time $T_D$ longer than the time $T_R$ required for reversing the movement of the tape 6 from the first direction to the second direction (time of movement reversal) so that the signal appearing at the magnetic head 5 immediately after such movement reversal temporarily precedes the input signal immediately before the movement reversal. When the input signal is an analog signal, an analog delay element such as a bucket brigade device (BBD) or change coupled device (CCD) may be used as the aforementioned delay element 3.

The recording pattern on the magnetic tape 6 at the time of the recording accompanying such movement reversal is shown for example in Fig. 2. In this Fig. 2, the two recording tracks 7A, 7B on the magnetic tape 6 in the tape running direction are formed in accordance with the recording in the aforementioned first and second directions (forward and return directions) in such a manner that the track 7A is formed when the tape 6 runs in the first direction (in the direction of the arrow mark A) relative to the recording head 5, and the track 7B is formed when the tape 6 runs in the second direction (in the direction of the arrow mark B). When the tape 6 is assumed to remain stationary the head 5 performs a relative movement thereto in the opposite directions, i.e. in the directions shown by the arrow mark A or B. In Fig. 2, the numerical figures entered in the tracks 7A, 7B represent the numbers (or addresses) of temporarily consecutive blocks of the input signals, and the right side extreme portions of the tracks 7A, 7B represent invalid record portions corresponding to tape acceleration or deceleration during movement reversal.

It is assumed that, with one block time (block period) $T_B$ on the time axis, the time $T_R$ required for movement reversal is equal to e.g. four blocks time 4 $T_B$, whereas the delay time $T_D$ of the delay element 3 is equal to e.g. eight blocks time 8 $T_B$.

In such case, the input signal supplied to the input terminal 1 appears directly (i.e. with zero delay time) at the terminal *a* of the changeover switch 2 of Fig. 1, whereas the input signal delay by eight blocks time 8 $T_B$ appears at the terminal *b* of the changeover switch 2. When the tape 6 runs in the first direction A (forward direction) the switch 2 has been set to the terminal *a* so that the input signal is delivered directly to the magnetic transducer head 5 and sequentially recorded on the first recording track 7A of the magnetic tape 6. Supposing that the tape has reached the terminal position at the time point that the 15th block has been recorded, an automatic movement reversal takes place during the time interval $T_R(=4\ T_B)$ and the tape starts to run in the second direction B. At this time, the switch 2 is set to the terminal *b* and the signal corresponding to the input signal delayed by $T_D$ (=8 $T_B$) is delivered to the head 5 and sequentially recorded on the second track 7B of the tape 6. The input signal supplied to the input terminal 1 immediately after such movement reversal is the 20th block signal later by 4 $T_B$ than the 15th block appearing immediately before the movement reversal. However, the output signal from the delay element 3 is the 12th block signal earlier by eight blocks (8 $T_B$) so that the signals are sequentially recorded on the second recording track 7B of the tape 6 starting from the 12th block. Thus the four blocks from the 12th to the 15th blocks are doubly or redundantly recorded before and after the movement reversal for preventing signal omission. While it is possible to set the delay time $T_D$ of the delay element so as to be equal to the time $T_R$ required for movement reversal ($T_D=T_R$) for preventing signal omission. However it is desirable to set the delay time greater than the time required for movement reversal $T_R$ ($T_D>T_R$) and to procure the time difference $T_D—T_R$ as time margin or allowance in consideration of the face that fluctuations may be caused in the time required for reversal and in the reversal position because of the mechanical means used for effecting the movement reversal and the error caused in tape end detection.

Although the signal delay is effected in the embodiment of Fig. 1 only for the recording in the second direction, it is also possible that a similar delay of the input signals be introduced for the recording in the first direction. For example, with the signal delay time $T_{DA}$ for the recording in the first direction and with the signal delay time $T_{DB}$ for the recording in the second direction, if the delay time intervals $T_{DA}$, $T_{DB}$ are set so that the time $T_D$ equal to the difference between these delay intervals or the time $T_{DB}—T_{DA}$ is longer than the time required for movement reversal $T_R$ ($T_D=T_{DB}—T_{DA}>T_R$), the recording without omission of input signals can be achieved.

When the signal delay time intervals are switched between the recording in the first direction and that in the second direction, it is not necessary to effect switching between the two signal delay elements with hardware. For example, it is only sufficient that a delay element such as random access memory (RAM) be provided and the difference between the write and read addresses for the recording in the first direction is set as as to be different from that for the recording in the second direction in order to provide for the different signal delay time in the writing and reading to and from the RAM.

In general, when the signals to be recorded are the digital signals obtained by pulse code modulation of the sampled values of the audio or video signals, delay elements such as memories are already employed for signal processing such as word interleaving or error correction coding. In such case, it is more practical that these memories used for signal processing (e.g. encoding) be used simultaneously as the signal delay element 3 accompanying the above described movement reversal. Although the delay elements 3 are included in such case in the signal processing circuit, it is of course possible that the delay elements be provided ahead or back of the encoder or the like device.

The recording tracks 7A, 7B of the patterns shown in Fig. 2 are formed on the magnetic tape 6 by the signal recording process described in the foregoing. When the thus recorded magnetic tape 6 is reciprocatingly reproduced by an automatic movement reversal (autoreverse), supposing that the movement is reversed after recording up to e.g. the 15th block in the first direction, the 12th to 15th blocks are redundantly reproduced during the reproduction in the second direction, which means an increased signal delay memory capacity.

Thus, with the signal recording and reproduction apparatus of the present invention, not only the block addresses for the first direction but those for the second direction are read out during reproduction in the first direction and the block addresses for the first and second directions are compared for deciding the optimum reversal position.

Thus, when the tape is running in the first direction A for reproduction in the forward route, each block address for the forward and reverse directions is changed with the tape running in the manner as indicated in Fig. 3. In this Figure 3, the forward route addresses indicated by the solid line are incremented while the return route addresses are decremented with increase in the tape travel quantity. The tape running position X immediately after the forward route addresses and the return route addresses are equal or reversed is an optimum running reversal position capable of providing for reproduction of the recorded signal data without omission and also providing for a minimum delay memory capacity.

The basic construction for effecting such automatic tape movement reversal during reproduction is shown by way of an example in Fig. 4. In this Fig. 4, the recording track 7A of the magnetic tape 6 reciprocatingly recorded by the above described recording method is reproduced by a forward reproducing head 21A, while the recording track 7B thereof is reproduced by the return reproducing head 21B. The reproducing signals from these heads 21A, 21B are amplified by reproducing amplifiers 22A, 22B, respectively, and supplied to the selected terminals *a*, *b* of the changeover switch 26, respectively, through address separating circuits 23A, 23B, respectively. During forward route reproduction, the switch 26 is set to the terminal *a* and only the reproducing signals from the address separating circuit 23A are supplied to the decoder 24 for decoding including signal delaying so as to be delivered to the output terminals 25. The address separating circuits 23A, 23B are used for extracting forward and return route addresses from the playback signals from the respective tracks 7A, 7B. The forward and return route addresses extracted in this manner are compared to each other as to relative signal magnitude at the address comparing circuit 27. When the foward route address is equal to or larger than the return route address, the optimum reversing position signal is supplied to a system control circuit 38. The optimum reversing position is situated for example at the 14th block playback position in the forward track 7A in the recording pattern shown in Fig. 2. Responsive to the detection of the optimum reversing position, the system control circuit 38 operates to reverse the tape running direction and to commutate the changeover switch from terminal *a* to terminal *b*. Thus, during the return reproduction following the movement reversal, the playback signals from the return route reproducing head 21B are supplied via amplifier 22B etc. through decoder 24 so as to be decoded and thence supplied to the output terminal 25.

It should be noted that the magnetic head 6 is running in the direction of the arrow mark A during reproduction in the forward direction so that the return route reproducing head 21B operates to scan the return route recording track in the opposite direction, and the return route playback signals are reproduced in the reverse time order.

Fig. 5 is a block circuit diagram showing an example of the more detailed construction of the basic circuit of the recording part shown in Fig. 1. In the present example, a random access memory 10 (RAM) is used as the delay element and the digital signals in the block form are sequentially recorded on the magnetic tape.

In this Fig. 5, the digital signals obtained from e.g. audio signals by PCM are supplied in the chronological order in the block form, these input signals being supplied to RAM 10 for digital signal delaying so as to be written in associated addresses (write addresses). The digital signal data read from associated addresses (read addresses) of the delaying RAM 10 are supplied to a recording magnetic transducer head 5 through an encoder 11 and a recording amplifier 4 so as to be recorded on the magnetic tape 6 as magnetic recording medium.

From a timing generator 12 in Fig. 5, there are outputted read/write control signals R/$\overline{W}$ for controlling the reading from and writing into RAM 10 during the entry of block signals, these control signals R/$\overline{W}$ being supplied to switching control terminals of a multiplexer 13 and to the delaying RAM 10, respectively. The function of the multiplexer 13 is to make a selection between the write address input WA and the read address input RA in accordance with the control signal R/$\overline{W}$ for sending the selected output signal to an address input terminal of the RAM 10. The write address WA is outputted from a write address counter 14 and the read address RA is outputted from a read address counter 15. To clock input terminals CK of these counters 14, 15 are supplied clock pulses of the aforementioned block period from the timing generator 12. The read address counter 15 also operates to output input address data from an address computing circuit 17 without any alteration and responsive to e.g. load commands from the system control circuit 16. The circuit 16 operates to control the reversal of the tape running direction responsive to command signals for movement reversal, for example, to the delivery of the tape end detection signals from a tape end sensor 18 to the control circuit 16. The circuit 16 also sends out pulses to a load control terminal LD of the read address counter 15 and to control terminals of the address computing circuit 17 for changing the read addresses before and after reversal and for changing delay time between the input and output of the delaying RAM 100. Write addresses from the write address counter 14 are supplied to the address computing circuit 17, for computing the post-reversal read addresses. The control circuit 16 also activates a reversal mark generator 19 responsive to input signals such as the aforementioned tape end detection signals, and reversal mark signals are supplied from the generator 19 to e.g. an encoder 11. The function of the several mark generator 19 is to produce the reversal mark signals indicating the impending movement reversing position, which reversal mark signals are recorded on the tape along with the input signals. It is preferred that the return route addresses to be detected during the forward route reproduction since the time that these reversal mark signals are detected so as to effect the comparison with the forward addresses.

The reversal mark signals are outputted from the reversal mark generator 19 since the detection of the tape end by the end sensor 18 until the start of the mechanical tape movement reversal, and are supplied to the encoder 11. These reversal mark signals are recorded, along with the input signals, on the terminal portions of the forward track 7A of the magnetic tape 6 as the recording medium. For example, the reversal mark and input signals are recorded in the seven blocks from the 9th to the 15th blocks indicated with circle marks in Fig. 2. It should be noted that the timing or the time interval that these reversal mark signals are recorded may be controlled by the system control circuit 16. For example, after ending of the movement reversal the reversal mark signals may be generated for a certain time (of the order of several block periods) and recorded at the beginning portion of the return track 7B (for example, several blocks from the 12th block in Fig. 2 towards left).

In the signal delaying RAM 10 of the circuit shown in Fig. 5, the input signal for one block are written in the associated write addresses in dependence upon the command of the write address WA, and the input signals for one block written in the associated read addresses are read out in dependence upon the commands of the read address RA. The one-block recording signals are arranged e.g. in a format shown in Fig. 6 and are essentially composed of a block sync signal portion BS, a flag portion FLG indicating various status, a block address portion BA, an input signal data portion DATA, a parity data portion P and an error correcting data portion CRCC, as viewed from the foremost position. The RAM 10 is able to store at least the input signal data portion DATA of the block format in association with an indicating address, while other portions of the format can be supplemented e.g. in the encoder 11. It is however, preferred that, since the signal delaying operation is included in the signal processing by the encoder, the RAM in the encoder be simultaneously used as the signal delaying RAM 10.

For recording the reversal mark signals, one bit of the various status flag portions FLG may be used as a reversal mark bit, in such a manner that the reversal mark bit always (excepting for the reversing position) becomes "0" or for indicating other the reversing position and becomes "1" for indicating the reversing position. Two or more bits may be used so that a binary value is incremented or decremented as the approaches to the actual (mechanical) reversing position.

In general, the aforementioned read address RA and the write address WA are indicated by a binary value with e.g. 8 bits. When a sequential access is made to the addresses in the binary representation with the aid of e.g., a binary counter, all the addresses may be considered to be sequentially arranged on a circle as shown in Figs. 7 to 9 by having access to an all "0" address after having access to an all "1" address. For example, in case of an 8-bit address, addresses 0 to 255 can be sequentially arranged in this order with the address 0 arranged next to the address 255 for forming an endless loop.

Fig. 7 shows the state of changes of the read address RA and the write address WA in the course of the forward route recording with the magnetic tape 6 running in the first direction A. Responsive to the count operation of the address counters 14, 15, the addresses RA, WA are moving at equal speeds in the direction of an arrow mark C on a circumference representative of the address space of the RAM 10. The delay time $T_{DA}$ for the forward route recording is determined by the number of addresses included between the write address WA and the read address RA. One address of the RAM 10 specifies one block of the recording signal and the address is incremented by one for each block period $T_{B1}$, so that, when the address difference (WA—RA) from the address WA to the address RA is, for example, $n_A$, the delay time $T_{DA}$ is equal to $n_AT_B$.

Fig. 8 shows the state in which a reversal command signal is sent during the forward route recording from the system control circuit 16 to the tape running system responsive to, for example, the tape end detection, that is, the state corresponding to the impending movement reversal. With a position $P_A$ in the RAM address space specified by the write address WA and a position $Q_A$ in the RAM address space specified by the read address RA, the difference in the address number between these addresses $P_A$ and $Q_A$ is equal to $n_A$ and the delay time is equal to $T_{DA}(=n_AT_B)$, as described hereinabove. During movement reversal, the write address WA continues to be moved in the direction of the arrow mark C at the constant speed for sequentially writing the input signals in the RAM 10 in the above described block sequence. On the contrary, no limitations are imposed on the read address RA, which may remain stationary at the position QA.

Upon the termination of the movement reversal, as shown in Fig. 9, the point specified by the write address WA is $P_B$ corresponding to a point advanced from the point $P_A$ by the time $T_R$ required for movement reversal. The point $Q_B$ specified by the read address RA is at an address position preceding the aforementioned point $Q_A$. The read address RA and the write address WA are removed in the direction of the arrow mark C at a speed equal to the pre-reversal speed. The delay time $T_{DB}$ since the time of reading until the time of writing is equal to a product of the block period $T_B$ and the difference $n_B(T_{DB}=n_BT_B)$ in the manner of addresses from WA to RA. It is necessary that the memory capacity of the RAM 10 and the read address RA immediately after the reversal be set so that the difference in time $T_D$ between the delay time $T_{DB}$ for the return route recording following movement reversal and the delay time $T_{DA}$ for forward route recording $(=T_{DB}—T_{DA})$ be larger than the aforementioned time required for movement reversal $T_R(T_D>T_R)$. Thus, it is required that, on the circumference of Fig. 9 corresponding to the RAM address space, the position $Q_B$ of the read address RA upon the termination of the movement reversal be set so that it is advanced in the direction, opposite to the direction C temporarily advanced, from the position $Q_B$ of the read address RA at the time of the initiation of the movement reversal, and also that it is ahead of the position $P_B$ of the write address WA in the direction C. Before and after the reversal operation, the input data written in the addresses from the point $Q_B$ to the point $Q_A$ is read out redundantly and recorded redundantly on both the forward route track 7A and the return route track 7B.

In Fig. 10, there is shown in a block diagram a practical circuit by means of which the magnetic tape as the recording medium on which the recording has been made by the signal recording method described in connection with Fig. 5 is reproduced with automatic movement reversal (auto-reverse).

Referring to Fig. 10, reciprocating recording has been made on the magnetic tape 6 with the aid of the recording device of Fig. 5 in accordance with a recording pattern as shown by way of an example in Fig. 2. The signals recorded on the tape 6 are reproduced by the reproducing transducer heads 21A, 21B to be amplified by the reproducing amplifiers 22A, 22B and thence supplied to the delaying RAM 30 through the reversal mark address separating circuits 23A, address separating circuit 23B and the changeover switch 26. The signals read out from RAM 30 are taken at the output terminal 25 through decoder 24.

Each signal block read out from the reproducing transducer heads 21A, 21B has the block format shown in Fig. 6. Thus, by sensing the block unit on the basis of the block sync portion BS, the block address portion BA and the reversal mark portion in the various status flags FLG in each block of the reproduced signal can be sequentially taken out at the reversal mark/address separating circuit 23A and the address separating circuit 23B. The block address outputs from the separating circuits 23A, 23B are delivered as write address WA to the multiplexer 31 through the changeover switch 28. The read address RA from the read address counter 32 are also introduced into the multiplexer 31, and the read address RA or the write address WA is occasionally selected in dependence upon the read/write control signal R/$\overline{W}$ from the timing generator 33 and supplied to the address input terminal of the RAM 30. Clock pulses are supplied from the timing generator 33 to the read address counter 32 with the constant block period so that the read address RA presents itself as a signal sequentially incremented at said constant block period. The read address RA from the read address counter 32 is delivered to a positive input terminal of the subtractive circuit 34. The write address WA from the reversal mark/address separating circuit 23A or the address separating circuit 23B is delivered to the negative input (subtracting input) terminal of the subtractive circuit 34 so that the difference in the number of addresses (RA—WA) is obtained from the subtractive circuit 34. The subtractive output is delivered to the tape driving motor 37 through an offset supplementing circuit 35 and a servo amplifier 36. The reversal mark detection signals from the reversal mark/address separating circuit 23A is delivered e.g. to the system control circuit 38. The block addresses from the address separating circuits 23A, 23B are compared in the address comparing circuit 27, and the detection signal of the aforementioned optimum reversal position is delivered to the system control circuit 38. Responsive to these reversal mark detection signal and the optimum reversal position detection signal, the system control circuit 38 operates to control the reversal in the tape running direction and to commutate the changeover switches 26, 28. These switches 26, 28 are set to the terminals *a* and *b* during forward route reproduction and return route reproduction, respectively.

Reference is had to Figs. 11 to 13 for explaining the playback operation with the auto-reverse function by means of the above described reproducing circuit. It is assumed that, with the recording pattern on the magnetic tape 6 as the recording medium as shown in Fig. 2, the operation of reversing the running direction is effected during forward route reproduction in the first direction A e.g. of the 9th to 15th blocks and at such time that the reversal mark signal or the aforementioned optimum reversing position have been detected, the tape being caused to run in the second direction after the predetermined time $T_R$ so as to start the return reproduction. In Figs. 11 to 13, the address space of the signal delaying RAM 30 is indicated by the circumference in the same manner as in Figs. 7 to 9 decribed hereinabove.

During forward reproduction, the read address RA and the write address WA are travelling in the direction C on the circumference corresponding to the address space as shown for example in Fig. 11. The speed of movement of the read address RA (address increment speed) is maintained constant by the clock signals supplied from the timing generator 33 of Fig. 10 to the read address counter 32, whereas the speed of movement of the write address WA (address increment speed) is changed with minor fluctuations in the tape running speed because the write address makes direct use of the address portions of the respective blocks in the reproducing signals. It should however be noted that the position of the read address RA relative to the write address WA is automatically controlled so that a constant offset $T_{off}$ is maintained by the tape driving a servo system including the subtractive circuit 34 and the offsetting circuit 35. The addresss offset $T_{off}$ is determined by the offset quantity of the off-setting circuit 35.

Next, at the time point that the aforementioned movement reversal is started responsive to the detection of the optimum reversing position, the write address WA ceases to be moved and the writing is discontinued, whereas the read address RA continues its movement at the aforementioned constant speed, as shown in Fig. 12. This is because the tape becomes substantially stationary and no playback signals are available during movement reversal. The position of the write address WA in the RAM address space at the time instant that the movement reversal is started is indicated as $U_A$ and that of the read address RA is indicated as $V_A$.

At the time instant that the movement reversal is terminated, the magnetic tape 6 is started to run in the second direction to start the reproduction of the recording on the second or return track 7B so that the write address WA also is started to run in the direction C, as shown in Fig. 13. The position $U_B$ of the write address WA at the instant the reversal is terminated is determined by the block address obtained for the first time during the reproduction in the second or return direction. When the reversal has occurred at the aforementioned optimum reversing position, the position $U_B$ is substantially coincident with the position $U_A$ of the start of reversal or slightly shifted therefrom in the direction opposite to the direction C. The position $V_B$ of the read address RA at the time the reversal is terminated is advanced in the direction C from the position $V_A$ by the time required for movement reversal $T_R$. The capacity of the delay RAM 30 need be so selected that the position $V_B$ at the instant of the reversal termination does not exceed the aforementioned position $U_B$.

After termination of the movement reversal and with progress in the return reproduction, the tape speed is increased by the operation of the tape running servo system including the substractive circuit 34 and the offsetting circuit 35 so that the movement of the write address WA in the direction C is accelerated and the write address draws to close to the read address RA. The distance between the addresses RA and WA is utlimately servo-controlled and approximately stabilized to the constant steady-state offset $T_{off}$ as shown in Fig. 11, so that the addresses RA and WA are moved in the direction C at the approximately equal speed.

Thus, no omission of the signals written into the delaying RAM 30 takes places before or after the movement reversal, while the read address RA is perpetually moved in the direction C at the constant speed so as to permit reading of temporarily-continuous signals. Also, in the steady-state forward or return reproduction condition shown in Fig. 11 the $T_{off}$ intervals before and after the write address WA represent a so-called jitter margin for compensating for fluctuations caused during tape running, whereas the remaining interval $T_M$ represents the reversal margin for compensating for fluctuations caused by movement reversal.

It should be noted that, while the block address of e.g. 8 bits is sufficient for identifying 256 blocks, the number of the blocks from the beginning until the end of the magnetic tape in the running direction thereof is extremely large so that the same block address will appear repeatedly at a constant period during tape running. It is therefore preferred that not only the comparison of the block addresses for the forward and return directions but also the reversal marks are resorted to so that the detection of the optimum reversing position by means of the address comparison output is validated only when the reversal mark signals are detected at the position where the movement reversal is required, as at the tape end. In the above embodiment, this is effected at the system control circuit 38 by taking the logical product (AND), for example, between the reversal mark detection signal and the optimum reversing position detection signal. Alternatively, the return reproducing head 21B is activated only when the reversal mark detection signal is obtained during the forward reproduction for reading out the return route addresses.

In the above described embodiment of the present invention, the time required for reversal between the forward movement and the return movement is compensated during the recording by the delay caused in the input signals by making use of the RAM 10 as input signal delay means so that continuous troublefree reverse recording is achieved without omission of the input signals recorded on the magnetic tape 6 as the recording medium.

For the reproduction of the thus recorded magnetic tape 6 as the recording medium, data are sequentially written into RAM 30 as signal delay means in association with the addresses of the playback signals obtained from the reproducing head 21 and the reading from the RAM is effected perpetually and continuously with the constant clock timing so that continuous trouble-free reverse playback is achieved without omission of the playback output signals. This is made possible by the fact that the playback signal data corresponding to the time required for movement reversal is redundantly stored as the reversal margin during the steady-state reproduction (at least under the impending movement reversal conditions).

According to an embodiment, the movement reversal is effected at the extreme position during the reproduction where the signal omission is still prevented from occurring, so that the reversal margin is reduced and the memory capacity of the delay RAM 30 is minimized. In addition thereto, because of the smaller memory capacity, the time that elapses since the start of reproduction until the actual sound reproduction is also reduced.

Although the present invention has been described hereinabove with respect to an application thereof to a stationary head type auto-reverse tape recorder, the present invention can also be applied to a rotary head type auto-reverse tape recorder as well. For example, Fig. 14 shows a reciprocating recording pattern on the magnetic tape 6 with the use of the rotary recording head. With the tape running in the direction A for forward route recording, plural recording tracks 7A are sequentially helically formed in the direction opposite to the direction A and, with the tape running in the direction B for return route recording, plural recording tracks 7B are sequentially recorded. In such case, a number of blocks, e.g. hundreds of blocks are formed as one frame on each helical recording track 7. One of these blocks may be used as a control block CTL in which may be included the aforementioned reversal mark information or the address (in this case, a frame address) used for the detection of the aforementioned optimum position.

With such rotary head type auto-reverse device, an axial error is increased by a factor of cot θ, where θ represents an angle of inclination of the recording tracks so that it is increased to a larger error in the running direction. Thus it is essential that the movement reversal position be determined with a higher accuracy. Therefore, the present invention can be applied most effectively to such rotary type recording device.

It is to be noted that the present invention is not limited to the above described embodiments, but may also be applied to the case of arranging input signals in a block form and including the reversal mark or address information etc. in each block, wherein the frequency division system or the system providing independent signal data tracks and the control tracks can be adopted besides the time division system in which the signal data portion, reversal mark or the address information are arranged on the time axis.

According to the signal recording apparatus of the present invention, the input signals temporarily preceding the input signals recorded on the medium immediately before the movement reversal are recorded since the time immediately following the movement reversal so that the input signals can be recorded on the recording medium without signal omission thus providing for a continuous trouble-free signal recording.

In addition thereto, according to the signal recording and reproducing apparatus of the present invention, in the reproduction of the recording medium on which recording has been made by the above described signal recording system, the playback signals from the playback or reproducing head are taken out at least immediately before the movement reversal with a delay longer than the time required for movement reversal so that the signals can be taken out continuously from the delay means during the reversal thus providing for a continuous trouble-free reverse reproduction.

Also, the information concerning the return route can be obtained during forward route reproduction so that movement reversal can be effected at a position necessary and sufficient for auto-reverse reproduction, while the capacity of the signal delay memory adapted for preventing the playback signal omission may be reduced.

**Claims**

1. A recording apparatus for recording signals on a reciprocating recording medium, said apparatus comprising:

—a recording head (5);

—driving means for driving said recording medium (6) in a first direction to record on a first track, and in a second direction to record on a second track;

—delay means (10) for supplying data signals to said recording head with a delay, said delay being longer during running of said recording medium in said second direction than during running in said first direction; and

—signal generating means (18) for emitting a recording medium reversal signal as soon as the near reversal position e.g. end position, of the recording medium in the first direction is indicated, characterized by

—means (16, 19) for supplying a predetermined number of predetermined reversal mark signals to said recording head (5) starting from the time when said recording medium reversal signal is emitted.

2. A reproducing apparatus for reproducing signals from a reciprocating recording medium, said apparatus comprising

—a reproducing head means (21A, 21B);

—driving means for driving said recording medium (6) in a first direction to reproduce data from a first track, and in a second direction to reproduce data from a second track; and

—delay means (30) for delaying said data signals as supplied from said reproducing head means with a delay, said delay being longer during running of said recording medium in said first direction than when running in said second direction; characterized by

—separation circuit means (23A) for separating a predetermined kind of signals namely reversal mark signals, having incrementing or decrementing values, indicating the near reversal position of the recording medium, from the signals read by said reproducing head means (21A, 21B); and

—comparing means (27, 38) for comparing said read reversal mark signals with a predetermined reversal mark signal for reversing the driving direction as soon as both signals become equal.

3. A reproducing apparatus for reproducing signals from a reciprocating recording medium, especially a recording apparatus according to claim 1, said apparatus comprising

—a reproducing head means comprising a first track reproducing head means (21A) and a second track reproducing head means (21B);

—driving means for driving said recording medium (6) in a first direction to reproduce data from a first track, and in a second direction to reproduce data from a second track; and

—delay means (30) for delaying said data signals as supplied from said reproducing head means with a delay, said delay being longer during running of said recording medium in said first direction than when running in said second direction, characterized by

—separation circuit means (23A, 23B) for separating a predetermined kind of signals, namely address signals, after having detected reversal mark signals indicating the near reversal position of the recording medium, from the signals read by said first track reproducing head means (21A) and said second track reproducing head means (21B); and

comparing means (27, 38) for comparing the address signals as read from both tracks and for reversing the driving direction as soon as both addresses become equal or the address read from the first track becomes higher than the address read from the second track.

**Patentansprüche**

1. Aufzeichnungsvorrichtung zum Aufzeichnen von Signalen auf einem vorund rückwärts bewegbaren Aufzeichnungsmedium, mit

—einem Aufzeichnungskopf (5);

—einem Antriebsmittel für das Aufzeichnungsmedium (6) in einer ersten Richtung zum Aufzeichnen in einer ersten Spur und in einer zweiten Richtung zum Aufzeichnen in einer zweiten Spur;

—einer Verzögerungseinrichtung (10) zum Zuführen von Datensignalen zum Aufzeichnungskopf mit einer Verzögerung, die beim Lauf des Aufzeichnungsmediums in der zweiten Richtung länger ist als während des Laufs in der ersten Richtung; und mit

—einem Signalerzeugungsmittel (18), das Umkehrsignale für den Wechsel der Laufrichtung des Aufzeichnungsmediums liefert, sobald angezeigt ist, daß die Umkehrposition, z.B. die Endposition des Aufzeichnungsmediums in der ersten Richtung nahe ist, gekennzeichnet durch

—Mittel (16, 19) zum Zuführen einer bestimmten Anzahl vorgegebener Umkehrmarkierungssignale an den Aufzeichnungskopf (5) ab dem Zeitpunkt, zu dem das Umkehrsignal ausgegeben wird.

2. Wiedergabeeinrichtung zum Wiedergeben von Signalen von einem vorund rückwärts bewegbaren Aufzeichnungsmedium, mit:

—einer Wiedergabekopfeinrichtung (21A, 21B);

—einem Antriebsmittel für das Aufzeichnungsmedium (6) in einer ersten Richtung zum Wiedergeben von Daten aus einer ersten Spur und in einer zweiten Richtung zum Wiedergeben von Daten aus einer zweiten Spur; und mit

—einer Verzögerungseinrichtung (30) zum Verzögern der Datensignale, wie sie von der Wiedergabekopfeinrichtung geliefert werden mit einer Verzögerung, die während des Laufs des Aufzeichnungsmediums in der ersten Richtung länger ist als während des Laufs in der zweiten Richtung, gekennzeichnet durch

—eine Abtrennschaltung (23A) zum Abtrennen einer vorgegebenen Art von Signalen, und zwar von Umkehrmarkierungssignalen, die aufsteigende oder absteigende Werte aufweisen, die anzeigen, daß die Umkehrposition des Aufzeichnungsmediums nahe ist, von den Signalen, die durch die Wiedergabekopfeinrichtung (21A, 21B) gelesen werden; und

—einen Vergleicher (27, 38) zum Vergleichen der Umkehrmarkierungssignale mit einem vorgegebenen Umkehrmarkierungssignal, zum Wechsel der Laufrichtung, sobald beide Signale gleich sind.

3. Wiedergabeeinrichtung zum Wiedergeben von Signalen von einem vorund rückwärts bewegbaren Aufzeichnungsmedium, insbesondere Wiedergabeeinrichtung nach Anspruch 2, mit:

—Wiedergabekopfeinrichtungen (21A, 21B) für eine erste und eine zweite Spur;

—einem Antriebsmittel zum Antreiben des Aufzeichnungsmediums (6) in einer ersten Richtung, um Daten von der ersten Spur wiederzugeben, und in einer zweiten Richtung, um Daten von der zweiten Spur wiederzugeben; und mit

—einer Verzögerungseinrichtung (30) zum Verzögern der von der Wiedergabekopfeinrichtung gelieferten Datensignale mit einer Verzögerung, die während des Laufs des Aufzeichnungsmediums in der ersten Richtung größer ist als während des Laufs in der zweiten Richtung; gekennzeichnet durch:

—eine Abtrennschaltung (23A, 23B) zum Abtrennen einer vorgegebenen Art von Signalen, und zwar von Adreßsignalen, nach dem Detektieren von Umkehrmarkierungssignalen, die anzeigen, daß die Umkehrposition des Aufzeichnungsmediums nahe ist, von der Signalen, die durch die Wiedergabekopfeinrichtung (21A) für die erste Spur und die Wiedergabekopfeinrichtung (21B) für die zweite Spur gelesen werden; und durch

—einen Vergleicher (27, 38) zum Vergleichen der von beiden Spuren gelesenen Adreßsignale und zum Wechsel der Antriebsrichtung, sobald beide Adressen gleich werden oder die von der ersten Spur gelesene Adresse größer wird als die von der zweiten Spur gelesene Adresse.

**Revendications**

1. Appareil d'enregistrement destiné à enregistrer des signaux sur un support d'enregistrement en mouvement alternatif, ledit appareil comportant:

—une tête d'enregistrement (5);

—un dispositif d'entraînement destiné à entraîner ledit support d'enregistrement (6) dans un premier sens pour enregistrer sur une première piste et dans un second sens pour enregistrer sur une seconde piste:

—un dispositif de retard (10) destiné à fournir des signaux de données à ladite tête d'enregistrement avec un retard, ledit regard étant plus long pendant le mouvement dudit support d'enregistrement dans ledit second sens que pendant le mouvement dans ledit premier sens; et

—un dispositif générateur de signaux (18) destiné à émettre un signal d'inversion de support d'enregistrement dès qu'au moins une position d'inversion, par exemple une position d'extrémité, du support d'enregistrement dans le premier sens est indiquée, caractérisé par

—un dispositif (16, 19) destiné à fournir un nombre prédéterminé de signaux de marquage d'inversion prédéterminés à ladite tête d'enregistrement (5) en commençant à partir de l'instant où ledit signal d'inversion de support d'enregistrement est émis.

2. Appareil de reproduction destiné à reproduire des signaux à partir d'un support d'enregistrement en mouvement alternatif, ledit appareil comportant

—un dispositif de têtes de reproduction (21A, 21B);

—un dispositif d'entraînement destiné à entraîner ledit support d'enregistrement (6) dans un premier sens pour reproduire des données à partir d'une première piste et dans un second sens pour reproduire des données à partir d'une seconde piste; et

—un dispositif de retard (30) destiné à retarder lesdits signaux de données fournis par ledit dispositif de têtes de reproduction avec un retard, ledit retard étant plus long pendant le mouvement dudit support d'enregistrement dans ledit premier sens que pendant le mouvement dans ledit second sens; caractérisé par

—un dispositif de circuit séparateur (23A) destiné à séparer un type prédéterminé de signaux, à savoir des signaux de marquage d'inversion contenant des valeurs d'incrémentation ou de décrémntation, indiquant le voisinage de la position d'inversion du support d'enregistrement, des signaux lus par ledit dispositif de têtes de reproduction (21A, 21B); et

—un dispositif de comparaison (27, 38) destiné à comparer lesdits signaux de marquage d'inversion lus avec un signal de marquage d'inversion prédéterminé afin d'inverser le sens d'entraînement dès que les deux signaux deviennent égaux.

3. Appareil de reproduction destiné à reproduire des signaux à partir d'un support d'enregistrement en mouvement alternatif, spécialement un appareil d'enregistrement selon la revendication 1, ledit appareil comportant

—un dispositif de têtes de reproduction comprenant un dispositif de têtes de reproduction de première piste (21A) et un dispositif de têtes de reproduction de seconde piste (21B);

—un dispositif d'entraînement destiné à entraîner ledit support d'enregistrement (6) dans un premier sens pour reproduire des données d'une première piste et dans un second sens pour reproduire des données d'une seconde piste; et

—un dispositif de retard (30) destiné à retarder lesdits signaux de données fournis par ledit dispositif de têtes de reproduction avec un retard, ledit retard étant plus long pendant le mouvement dudit support d'enregistrement dans ledit premier sens que pendant le mouvement dans ledit second sens; caractérisé par

—un dispositif de circuit séparateurs (23A, 23B) destiné à séparer un type prédéterminé de signaux, à savoir des signaux d'adresse après avoir détecté des signaux de marquage d'inversion, indiquant le voisinage de la position d'inversion du support d'enregistrement, des signaux lus par le dispositif de têtes de reproduction de première piste (21A) et le dispositif de têtes de reproduction de seconde piste (21B); et

—un dispositif de comparaison (27, 38) destiné à comparer les signaux d'adresse lus dans les deux pistes et à inverser le sens d'entraînement dès que les deux adresses deviennent égales ou que l'adresse lue dans la première piste devient supérieure à l'adresse lue dans la seconde piste.

FIG.1

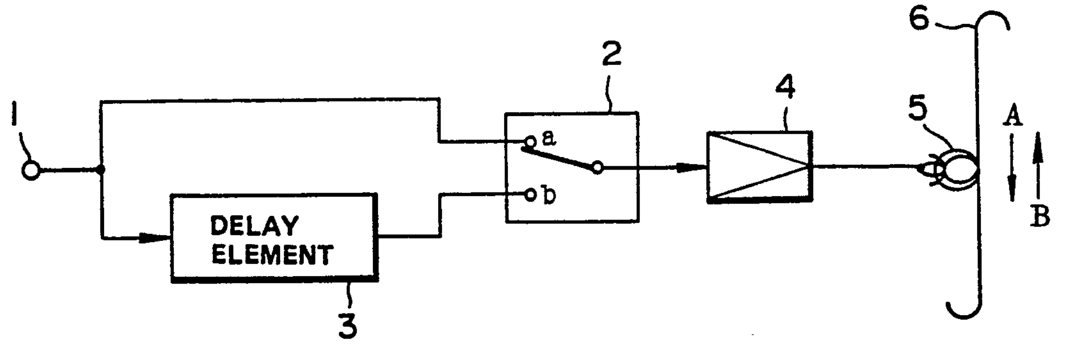
1
2
a
b
DELAY
ELEMENT
3
4
5
6
A
B

FIG.2

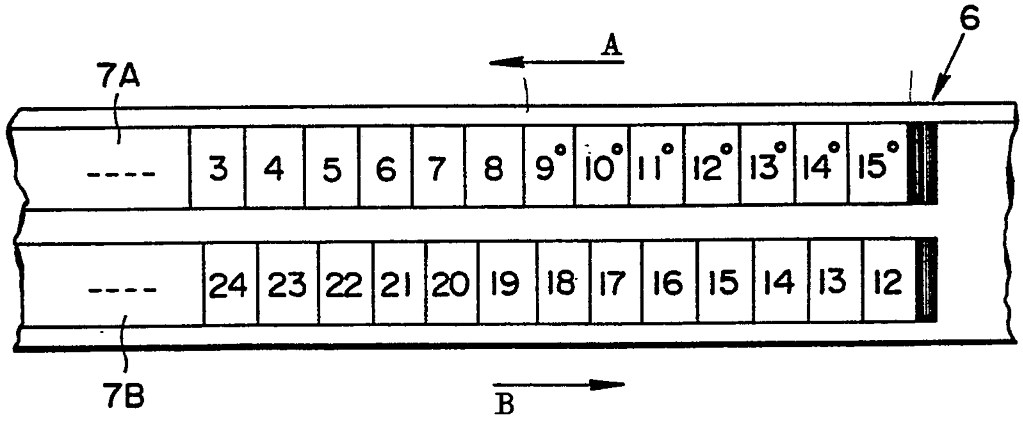
A
6
7A
----
3
4
5
6
7
8
9°
10°
11°
12°
13°
14°
15°
----
24
23
22
21
20
19
18
17
16
15
14
13
12
7B
B

FIG.3

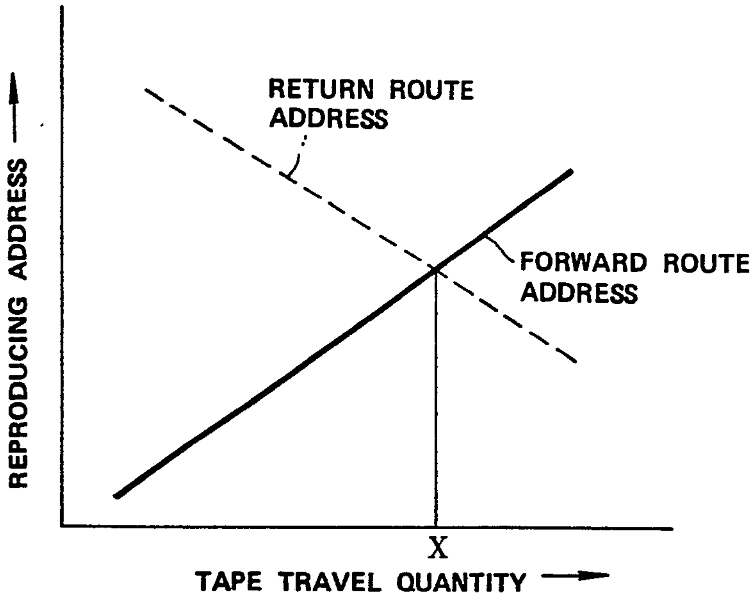
REPRODUCING ADDRESS
RETURN ROUTE ADDRESS
FORWARD ROUTE ADDRESS
X
TAPE TRAVEL QUANTITY

FIG.4

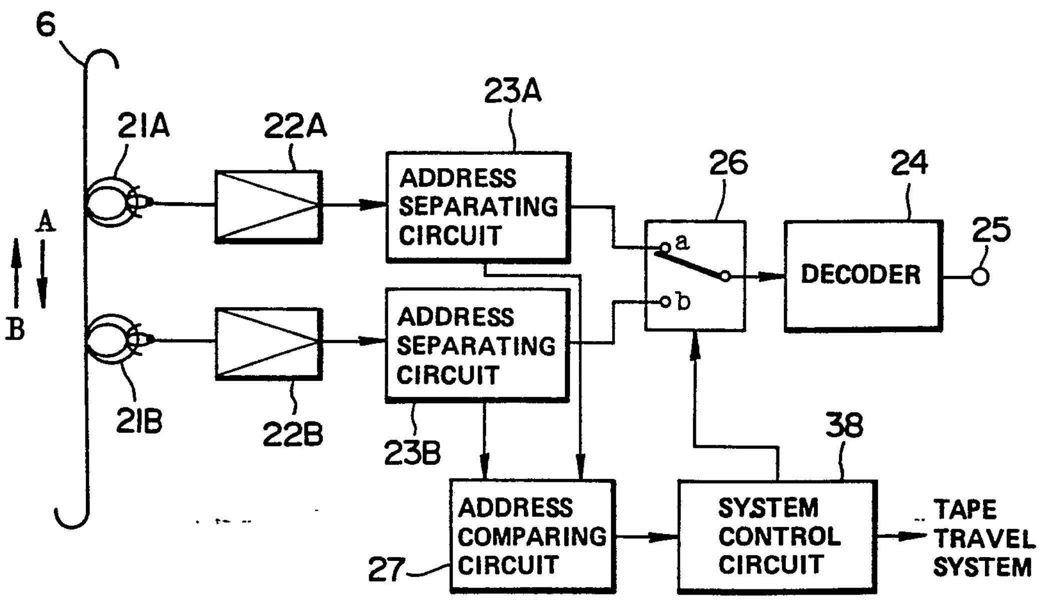
6
21A
22A
23A
ADDRESS SEPARATING CIRCUIT
26
24
25
a
b
DECODER
A
B
ADDRESS SEPARATING CIRCUIT
21B
22B
23B
38
ADDRESS COMPARING CIRCUIT
SYSTEM CONTROL CIRCUIT
TAPE TRAVEL SYSTEM
27

FIG.5

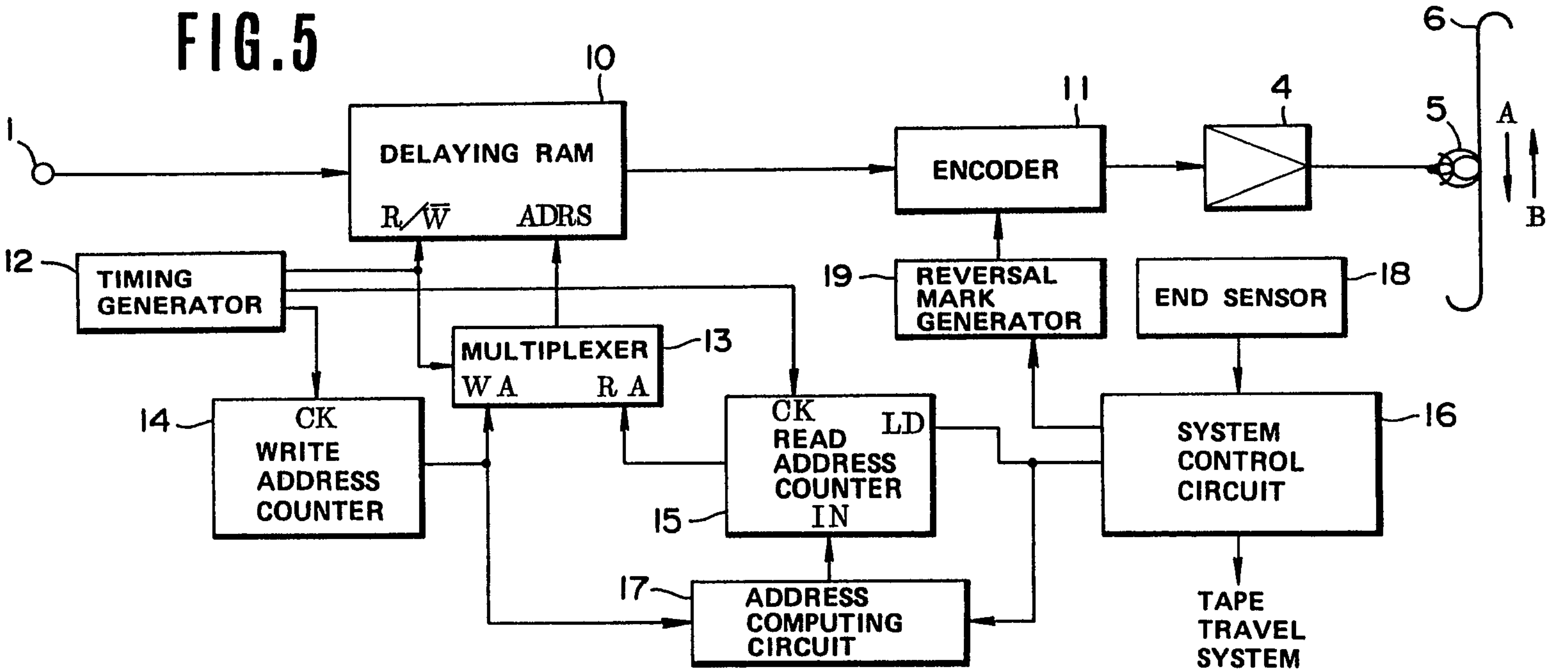
DELAYING RAM
R/W̄
ADRS
ENCODER
TIMING GENERATOR
MULTIPLEXER
WA
RA
CK
WRITE ADDRESS COUNTER
CK
READ ADDRESS COUNTER
LD
IN
ADDRESS COMPUTING CIRCUIT
REVERSAL MARK GENERATOR
END SENSOR
SYSTEM CONTROL CIRCUIT
TAPE TRAVEL SYSTEM
A
B
1
4
5
6
10
11
12
13
14
15
16
17
18
19

FIG.6

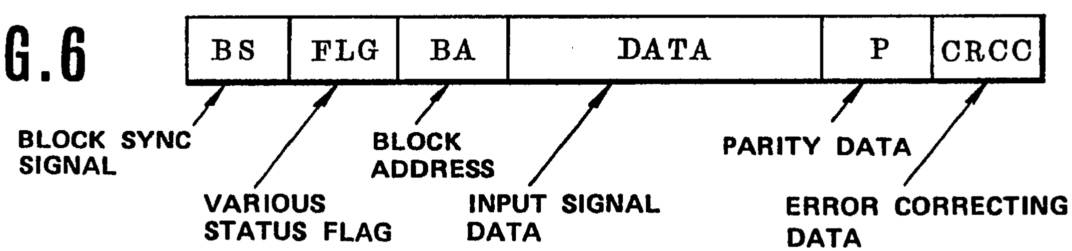
BS
FLG
BA
DATA
P
CRCC
BLOCK SYNC SIGNAL
VARIOUS STATUS FLAG
BLOCK ADDRESS
INPUT SIGNAL DATA
PARITY DATA
ERROR CORRECTING DATA

FIG.7

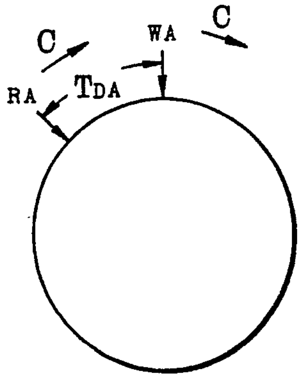


FIG.11

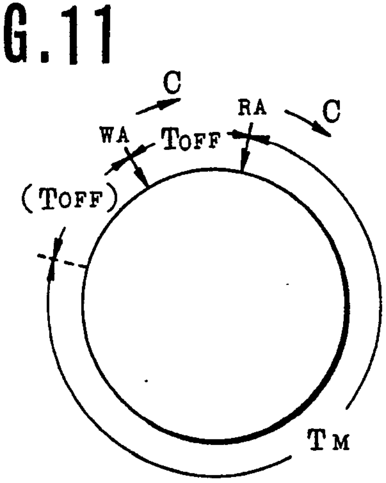


FIG.8

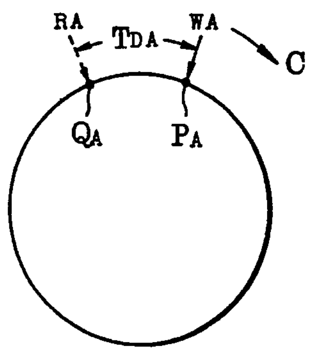


FIG.12

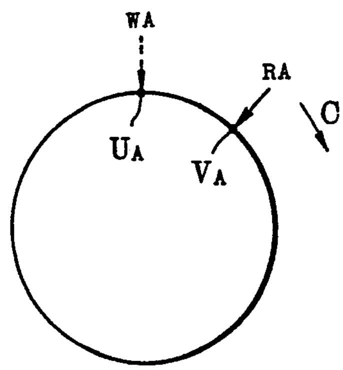


FIG.9

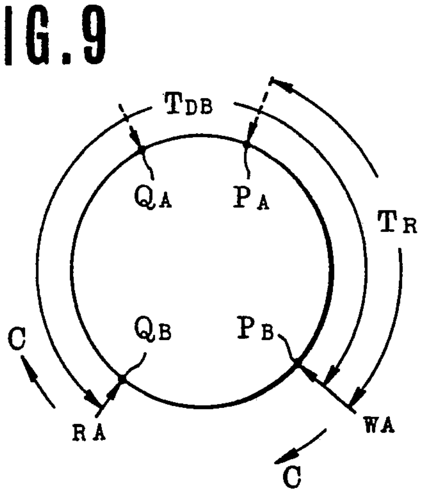


FIG.13

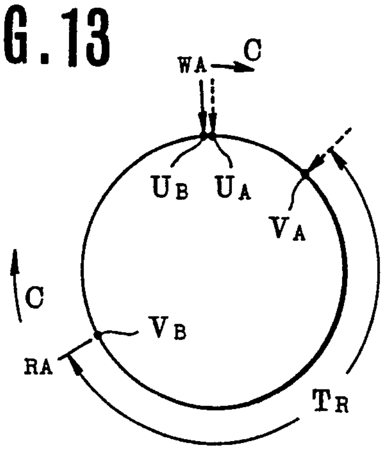

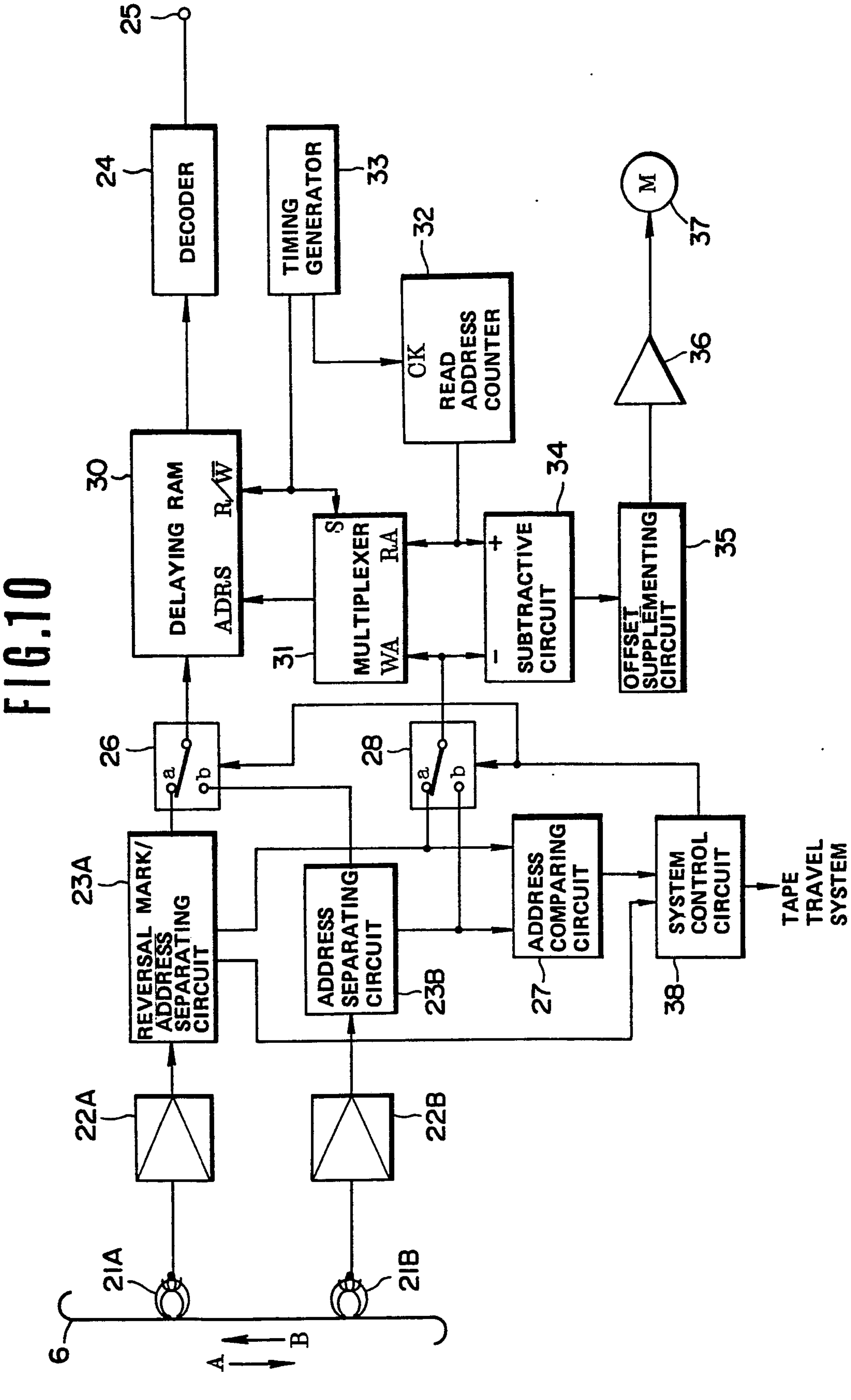
25
24
DECODER
TIMING GENERATOR
33
32
CK
READ ADDRESS COUNTER
M
37
36
30
DELAYING RAM
ADRS
R/W̄
S
MULTIPLEXER
RA
WA
31
34
+
−
SUBTRACTIVE CIRCUIT
OFFSET SUPPLEMENTING CIRCUIT
35
26
a
b
28
23A
REVERSAL MARK/ ADDRESS SEPARATING CIRCUIT
ADDRESS SEPARATING CIRCUIT
23B
ADDRESS COMPARING CIRCUIT
27
SYSTEM CONTROL CIRCUIT
38
TAPE TRAVEL SYSTEM
22A
22B
21A
21B
6
A
B

FIG.10

FIG. 14